# EUROPÄISCHE PATENTSCHRIFT

(11) **EP 2 260 991 B1**
(45) Veröffentlichungstag und Bekanntmachung des Hinweises auf die Patenterteilung: **22.04.2015**
(21) Anmeldenummer: 10405088.5
(22) Anmeldetag: 23.04.2010
(51) Int. Cl.: B29B 7/44, B29B 7/42, B29C 47/38, B29C 47/64, B29C 47/00, B29C 47/44, B29C 47/66, B29C 47/60

(54) **Misch- und Knetmaschine für kontinuierliche Aufbereitungsprozesse, Verfahren zur Durchführung von kontinuierlichen Aufbereitungsprozessen mittels einer Misch- und Knetmaschine, sowie deren Verwendung**
Mixing and kneading machine for continuous preparation processes, method for carrying out continuous preparation processes with a mixing and kneading machine, and use thereof
Machine de mélange et de malaxage pour processus de préparation continue, procédé d'exécution de processus de préparation continue à l'aide d'une machine de mélange et de malaxage, et son utilisation

(30) Priorität: 11.05.2009 CH 7302009
(43) Veröffentlichungstag der Anmeldung: 15.12.2010
(73) Patentinhaber: Buss AG, 4133 Pratteln (CH)
(72) Erfinder: Franz, Peter, 4127 Birsfelden (CH); Stampfli, Joel, 4450 Sissach (CH); Siegenthaler, Hans-Ulrich, 5034 Suhr (CH)
(74) Vertreter: EGLI-EUROPEAN PATENT ATTORNEYS

(56) Entgegenhaltungen:
- EP-A2- 2 018 946
- CH-A- 528 294
- US-A- 3 253 818
- US-A- 3 570 588

## Beschreibung

Die Erfindung betrifft eine Misch- und Knetmaschine für kontinuierliche Aufbereitungsprozesse, mit einer in einem Gehäuse rotierenden und sich gleichzeitig translatorisch bewegenden Schneckenwelle gemäss dem Oberbegriff des Anspruchs 1. Die Erfindung betrifft im Weiteren ein Verfahren zur Durchführung von kontinuierlichen Aufbereitungsprozessen gemäss einem der Ansprüche 11 bis 14 . Schliesslich wird im Anspruch 15 eine Verwendung der Maschine beansprucht.

Misch- und Knetmaschinen der hier zur Rede stehenden Art werden insbesondere zum Aufbereiten von schüttgutartigen (Pulver, Granulate, Flakes, etc.), plastischen und/oder pastösen Massen eingesetzt.

Das Arbeitsorgan der Misch- und Knetmaschine ist üblicherweise als sogenannte Schneckenwelle ausgebildet, welche das zu verarbeitende Material in axialer Richtung vorwärts transportiert.

Bei herkömmlichen Misch- und Knetmaschinen führt das Arbeitsorgan lediglich eine rotative Bewegung aus. Daneben sind jedoch auch Misch- und Knetmaschinen bekannt, bei denen das Arbeitsorgan rotiert und sich gleichzeitig translatorisch bewegt. Der Bewegungsablauf des Arbeitsorgans zeichnet sich dabei insbesondere dadurch aus, dass die Hauptwelle eine der Rotation überlagerte Sinusbewegung ausführt. Dieser Bewegungsablauf ermöglicht das gehäuseseitige Anbringen von Einbauten, so genannte Knetbolzen oder Knetzähne. Der gewundene Schneckenflügel der Schneckenwelle ist dazu unterbrochen, so dass einzelne Knet- bzw. Schneckenflügel gebildet werden. Die auf der Hauptwelle angeordneten Schneckenflügel und die gehäuseseitigen Einbauten greifen ineinander und erzeugen damit die gewünschten Scher-/ Misch- und Knetfunktionen in unterschiedlichen Verfahrenszonen. Derartige Misch- und Knetmaschinen der letztgenannten Art sind Fachleuten insbesondere unter dem Begriff Buss Ko-Kneter® bekannt.

In der CH 528 294, die eine Misch- und Knetmaschine gemäss dem Oberbegriff des Anspruchs 1 offenbart, ist ein Buss Ko-Kneter® beschrieben. Dieser besitzt ein Gehäuse, in dem eine hohle Welle drehbar und gleichzeitig hin- und herbewegbar gelagert ist. Die Welle ist mit vier Schneckenflügeln oder einem Mehrfachen davon versehen, wobei die Schneckenflügel mit an der Innenwand des Gehäuses angeordneten Knetzähnen zusammenwirken. In einem ersten Ausführungsbeispiel beträgt der Innendurchmesser des Gehäuses 200mm, während er in einem zweiten Ausführungsbeispiel 400mm und in einem dritten Ausführungsbeispiel 600mm beträgt. Der Aussendurchmesser der Welle liegt somit im ersten Beispiel bei knapp 200mm, im zweiten bei knapp 400mm und im dritten bei knapp 600mm. Die wirksame Länge der Maschine ist für alle Gehäusedurchmesser mit 1390mm angegeben, was einem Verhältnis PI/Da von Prozessraumlänge PI zu Schneckenwellenaussendurchmesser von ca. 2.3-7 entspricht. Die Differenz zwischen dem Durchmesser des Gehäuses und dem Durchmesser des Kerns der Welle beträgt bei allen Baugrössen 70mm. Das Verhältnis Da/Di von Schneckenwellenaussendurchmesser Da zu Schneckenwelleninnendurchmesser Di beträgt somit zwischen 1.13 und 1.54. Die Anzahl der Axialbewegungen der Schneckenwelle ist proportional zu dem Gehäusedurchmesser, während die Wellendrehzahl umgekehrt proportional zu dem Gehäusedurchmesser gewählt wird. Bei einem Gehäusedurchmesser von 400mm führt die Schneckenwelle zwei Axialbewegungen pro Umdrehung aus, während es bei einem Gehäusedurchmesser von 600mm drei Axialbewegungen pro Umdrehung sind. Die geometrischen Kemgrössen (a, b bzw. d, e) sind bei dieser Maschine so gewählt, dass sich für unterschiedliche Baugrössen immer die selbe Gangtiefe s ergibt: s=(b-a)/2=(e-d)/2. Dies führt dazu, dass sich für die Oberfläche und das Volumen der einzelnen Baugrössen die gleichen Verhältniszahlen bilden. Dies bedeutet, dass ein Scale-up bzw. Scale-down immer über die zur Verfügung stehende Oberfläche realisiert werden muss. Somit eignet sich diese Maschine nur für Verfahren und Prozesse die ausschliesslich durch Oberflächenvorgänge definiert sind (z.B. Wärmeaustausch). Mit einer derartig ausgebildeten Maschine können zudem nur vergleichsweise geringe Mengen an Material pro Zeiteinheit verarbeitet werden, da maximal über das quadratische Verhältnis des Schneckenaussendurchmessers hoch- oder hinuntergerechnet werden kann.

Aus der EP 2 018 946 A2 ist eine Misch- und Knetmaschine für kontinuierliche Aufbereltungsprozesse bekannt. Diese besitzt eine in einem Gehäuse rotierende und sich gleichzeitig in axialer Richtung translatorisch bewegende Schneckenwelle. Das Verhältnis Da/Di von Schneckenwellenaussendurchmesser Da zu Schneckenwelleninnendurchmesser Di liegt zwischen 1.5 und 2.0, während das Verhältnis Da/H von Schneckenwellenaussendurchmesser Da zu Hub H zwischen 4 und 6 liegt. Das Verhältnis T/H von Teilung T zu Hub H liegt zwischen 1.3 und 2.5. Eine derartig ausgebildete Misch- und Knetmaschine wird vorzugsweise mit Drehzahlen von über 500 1/min betrieben.

Ausgehend von dem genannten Stand der Technik soll für zukünftige Verfahren und Maschinen darauf geachtet werden, dass die Verfahren und damit verbunden Scaleup/Scale-down Vorgänge, möglichst nahe an Volumenvorgängen betrieben werden. Dies führt dazu, dass die geometrischen Verhältnisse so gewählt werden müssen, dass - um die oben genannten Bezeichnungen zu wählen - da zumindest die Verhältnisse b/a und e/d, vorzugsweise auch alle weiteren Werte, innerhalb der Baureihe, in etwa die gleichen Werte ergeben. So kann über das kubische Verhältnis der Schneckenaussendurchmessers hoch- oder hinuntergerechnet werden kann.

Für bestimmte Anwendungsgebiete wie beispielsweise die Aufbereitung einer Anodenmasse zur Herstellung von Elektroden -Anoden- für die Aluminiumindustrie wäre es wünschenswert, wenn der Ausstoss der Maschine nachhaltig gesteigert werden könnte, ohne dass die Maschine wesentlich vergrössert werden muss, da eine Vergrösserung der Maschine neben einer Erhöhung der Kosten auch mit anderen Nachteilen einhergehen: Beispielsweise überproportionale Zunahme von mechanischen Kräften (statisch, dynamisch), Wärmedehnungsunterschiede zwischen Schneckenwelle und Gehäuse und ungünstige Veränderung des Oberflächen-/Volumen-Verhältnisses. Da bei der Gewinnung von Aluminium mittels Elektrolyse die jeweilige Anode wegen des im Prozess entstehenden Sauerstoffs abbrennt, muss die Anode ständig ersetzt werden. Die Herstellung von Aluminium erfolgt üblicherweise mittels Schmelzflusselektrolyse von Aluminiumoxid nach dem Kryolith-Tonerde-Verfahren. Dazu wird Aluminiumoxid zur Herabsetzung des Schmelzpunktes in einer Kryolithschmelze aufgelöst. Zurzeit wird der jährliche Bedarf an Elektrodenmassen in der Aluminiumindustrie weltweit auf rund 13 Millionen Tonnen pro Jahr geschätzt.

Es sind Misch- und Knetmaschinen zur Aufbereitung einer Elektrodenmasse bekannt, bei denen der Schneckendurchmesser bis zu 700 mm beträgt. Der jeweilige Materialdurchsatz bei der Herstellung der Elektrodenmasse, welche im Wesentlichen aus Koks und Pech aufbereitet wird, beträgt bei den grössten Wellendurchmessem bis 55'000 kg/h. Je nach Grösse der Misch- und Knetmaschine werden die Schneckenwellen bei den bekannten Maschinen mit einer Drehzahl zwischen 20 und 60 1/min betrieben.

Der Erfindung liegt daher die Aufgabe zugrunde, eine gemäss dem Oberbegriff des Anspruchs 1 ausgebildete Misch- und Knetmaschine derart weiterzubilden, dass deren Durchsatz bei gegebener Grösse nachhaltig gesteigert werden kann, wobei sich die Maschine insbesondere zur Aufbereitung von Anodenmassen eignen soll.

Diese Aufgabe wird mit einer Misch- und Knetmaschine gelöst, welche die im Kennzeichen des Anspruchs 1 angegebenen Merkmale aufweist.

Indem die Schneckenwelle der Misch- und Knetmaschine zwischen vier und sechs Gruppen von radial gleichmässig über den Umfang verteilten Schneckenflügeln aufweist und die jeweilige Gruppe aus einer Mehrzahl von axial hintereinander angeordneten Schneckenflügeln besteht und das Verhältnis PI/Da von Prozessraumlänge PI zu Schneckenwellenaussendurchmesser Da zwischen 8 und 12 liegt, wobei der Schneckenwellenaussendurchmesser (Da) zwischen 400 und 800 Millimetern liegt und das Verhältnis Da/Di vom Schneckenwellenaussendurchmesser (Da) zum Schneckenwelleninnendurchmesser (Di) zwischen 1.5 und 2.0 liegt, kann der Durchsatz der Misch- und Knetmaschine bei gegebener Grösse nachhaltig gesteigert werden. Insbesondere kann die Dispergier-, Misch- und Homogenisierungsgüte gegenüber gattungsgemässen, mit höchstens drei Schneckenflügeln versehenen Maschinen, nachhaltig gesteigert werden ohne die Maschine selber zu vergrössern. Diesbezügliche Versuche haben ergeben, dass der Durchsatz gegenüber herkömmlichen Maschinen um bis zu 50% gesteigert werden kann, so dass mit einer Misch- und Knetmaschine, welche einen Schneckenwellenaussendurchmesser (Da) in der Grössenordnung von ca. 700-800 Millimetern und eine Prozessraumlänge (PI) in der Grössenordnung von ca. 8-12 PI/Da aufweist, bis zu 100 Tonnen Anodenmasse pro Stunde aufbereitet werden können.

Bevorzugte Weiterbildungen der Misch- und Knetmaschine sind in den abhängigen Ansprüchen 2 bis 10 angegeben.

Eine weitere Aufgabe der Erfindung besteht darin, ein Verfahren zur Durchführung von kontinuierlichen Aufbereitungsprozessen mittels einer gemäss dem Anspruch 1 ausgebildeten Misch- und Knetmaschine vorzuschlagen, mittels welchem der Materialdurchsatz pro Zeiteinheit gesteigert werden kann.

Zur Lösung dieser Aufgabe wird ein Verfahren gemäss Anspruch 11 vorgeschlagen. Bevorzugte Weiterbildungen des Verfahrens sind in den Ansprüchen 12 bis 14 angegeben.

Nachfolgend wird die Erfindung mittels Zeichnungen näher erläutert. Es zeigt:
- Fig. 1: einen Längsschnitt durch eine schematisch dargestellte Misch- und Knetmaschine;
- Fig. 2: den geometrischen Aufbau eines Abschnitts einer erfindungsgemäss gestalteten Schneckenwelle;
- Fig. 3: die Schneckenwelle in einer Ansicht von der Stirnseite;
- Fig. 4: die Schneckenwelle in einer Seitenansicht;
- Fig. 5a: eine Seitenansicht eines Schneckenflügels;
- Fig. 5b: einen Querschnitt durch den Schneckenflügel;
- Fig. 6: die Relativbewegung zwischen den Knetbolzen und den Schneckenflügeln in schematischer Darstellung, und
- Fig. 7: eine Vergleichstabelle.

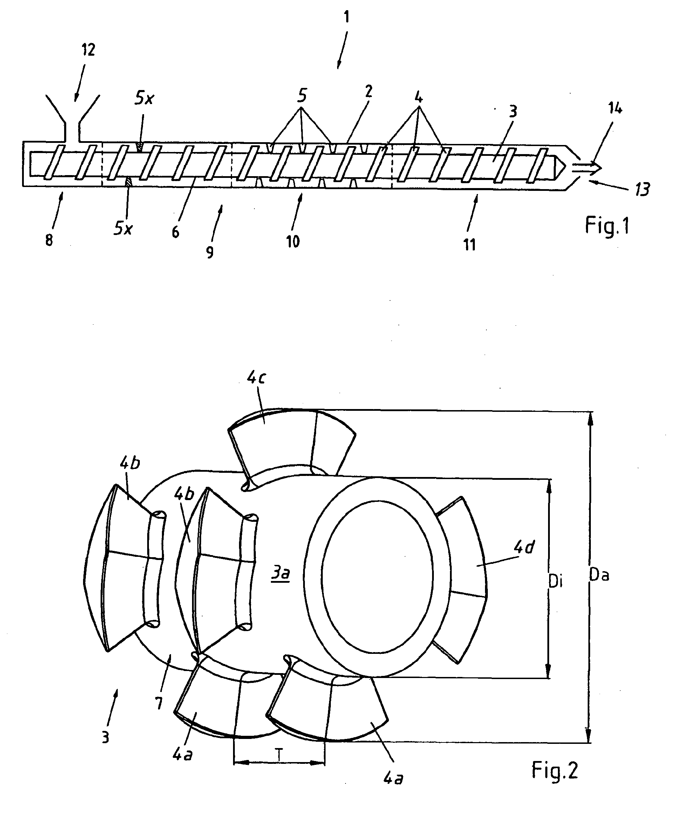

Fig. 1 zeigt einen Längsschnitt durch eine schematisch dargestellte Misch- und Knetmaschine 1. Die Misch- und Knetmaschine 1 weist ein von einem Gehäuse 2 umschlossenes Arbeitsorgan in Form einer Schneckenwelle 3 auf, welche mit einer Vielzahl von spiralförmig verlaufenden Schneckenflügeln 4 versehen ist. Die Schneckenflügel 4 der Schneckenwelle 3 sind in Umfangsrichtung unterbrochen, um axiale Durchtrittsöffnungen für am Gehäuse 2 angeordnete Knetbolzen oder Knetzähne 5 zu schaffen. Dadurch kann die Schneckenwelle 3 neben der eigentlichen Rotation auch eine axiale, d.h. eine translatorische Bewegung ausführen. Zwischen der Innenseite des Gehäuses 2 und der Schneckenwelle 3 wird der eigentliche Prozessraum 6 gebildet, der üblicherweise mehrere axial hintereinander angeordnete Verfahrenszonen 8-11 umfasst. Im vorliegenden Beispiel weist die Misch- und Knetmaschine 1 beispielhaft eine Einzugszone 8, eine Aufschmelzzone 9, eine Misch- und Dispergierzone 10 sowie eine Entgasungszone 11 auf. Einlassseitig ist die Misch- und Knetmaschine 1 mit einem Fülltrichter 12 versehen, während auslassseitig eine Austrittsöffnung 13 vorgesehen ist, über welche das aufbereitete Material in Pfeilrichtung 14 austreten kann. Der grundsätzliche Aufbau einer derartigen Misch- und Knetmaschine ist beispielsweise aus der CH 278,575 bekannt. Obwohl im gezeigten Beispiel nur im Bereich der Misch- und Dispergierzone 10 Knetbolzen oder Knetzähne 5 eingezeichnet sind, können Knetbolzen oder Knetzähne 5, je nach Bedarf, natürlich auch in anderen Zonen angeordnet werden.

Um eine oder mehrere flüssige Komponente(n) an einer oder mehreren Stellen in den Prozessraum 6 einzuspritzen, sind Knetbolzen oder Knetzähne 5x vorgesehen, welche mit einer Öffnung zum Einspritzen einer flüssigen Komponente versehen sind. Im Falle der Aufbereitung einer Elektrodenmasse wird über solche Knetbolzen oder Knetzähne 5x das Pech in flüssiger bzw. verflüssigter Form zugeführt.

Die Fig. 2 zeigt den geometrischen Aufbau eines Abschnitts -Moduls- einer erfindungsgemäss gestalteten Schneckenwelle 3 in perspektivischer Ansicht. In einer Misch- und Knetmaschine 1 werden mehrere solcher Module hintereinander zu der eigentlichen Schneckenwelle angeordnet. Die Schneckenwelle 3 ist für den Einsatz in einer Misch- und Knetmaschine 1 vorgesehen, welche in der Form eines sogenannten Einschneckenextruders ausgebildet ist, wobei die Schneckenwelle 3 als rotierendes und sich gleichzeitig translatorisch bewegendes Arbeitsorgan ausgebildet ist, wie dies bei dem eingangs erwähnten Buss Ko-Kneter® der Fall ist. Das Schneckenwellenmodul 3a ist mit insgesamt vier Gruppen von Schneckenflügeln 4a-4d versehen, welche radial gleichmässig über den Umfang verteilt angeordnet sind. Die jeweilige Gruppe besteht aus einer Mehrzahl von axial hintereinander angeordneten Schneckenflügeln 4a-4d, auch wenn im einen Fall nur ein einziger Schneckenflügel 4c eingezeichnet ist. Sobald jedoch mehrere Module hintereinander geschaltet sind, so umfasst jede Gruppe eine Vielzahl von axial hintereinander angeordneten Schneckenflügeln.

Sowohl in axialer wie auch in radialer Richtung bleibt zwischen den Schneckenflügeln 4a-4d jeweils eine Durchtrittsöffnung frei, in welche sich am Gehäuse angeordnete Knetbolzen oder Knetzähne (nicht dargestellt) erstrecken können. Der Innendurchmesser der Schneckenwelle 3 ist mit Di bezeichnet, während der Aussendurchmesser der Schneckenwelle 3 mit Da bezeichnet ist. Der Innendurchmesser Di wird durch die äussere Mantelfläche der Schneckenwelle 3 bestimmt, während der Aussendurchmesser Da durch den diametralen Abstand zwischen den höchsten Punkten von einander diametral gegenüberliegenden, in axialer Richtung jedoch versetzten Knetflügeln 4a, 4c bestimmt wird. Die Teilung, d.h. der mittlere Abstand zwischen zwei in axialer Richtung aufeinander folgenden Schneckenflügeln 4a-4a ist mit T bezeichnet. Der Hub, d.h. der Weg, den die Schneckenwelle 3 in axialer Richtung zurücklegt, wird mit H bezeichnet.

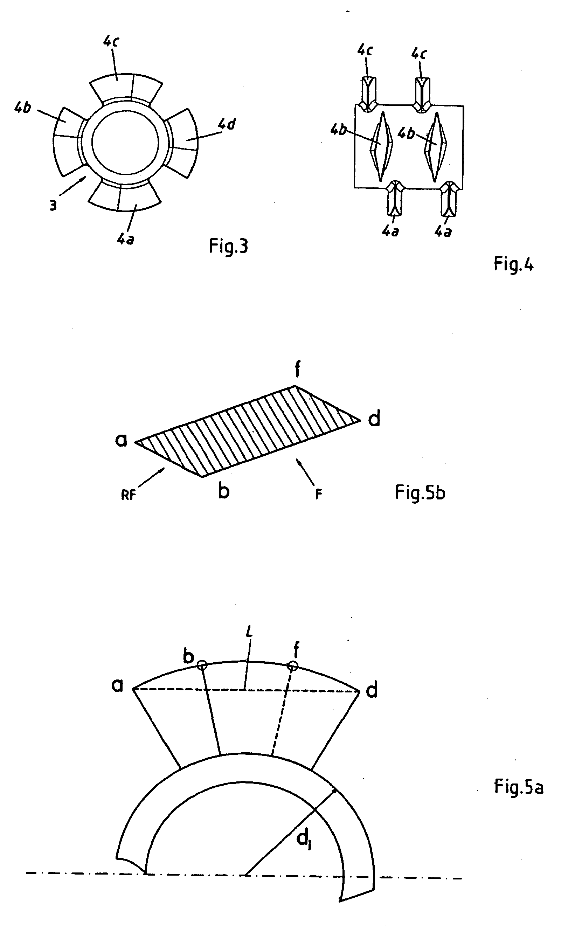

Anhand der Fig. 3, welche die Schneckenwelle 3 in einer Ansicht von der Stirnseite zeigt, ist erkennbar, dass die vier Schneckenflügel 4a-4d radial gleichmässig über den Umfang der Schneckenwelle 3 verteilt angeordnet sind.

Die Fig. 4 zeigt die Schneckenwelle 3 in einer Seitenansicht. Aus dieser Darstellung ist ersichtlich, dass die jeweilige Gruppe von Schneckenflügeln aus einer Mehrzahl von axial hintereinander angeordneten Schneckenflügeln 4a-4a, 4b-4b, 4c-4c besteht. Es versteht sich, dass die gesamte, aus einer Mehrzahl von Modulen bestehende Schneckenwelle nicht nur jeweils zwei axial hintereinander angeordnete Schneckenflügel aufweist, sondern ein Mehrfaches davon.

Die Fig. 5a zeigt eine Seitenansicht eines Schneckenflügels 4c während die Fig. 5b einen Querschnitt durch den Schneckenflügel 4c entlang der Linie L in der Fig. 5a zeigt. Die vier Kanten des Schneckenflügels 4c sind mit a, b, c und d bezeichnet. Obwohl der Schneckenflügel 4c im Querschnitt gesehen im Wesentlichen parallelogrammförmig ausgebildet ist, weist der gesamte Schneckenflügel bzw. dessen Mantelfläche eine komplexe Formgebung auf, wobei vorzugsweise zumindest die Hauptflächen als Freiformflächen ausgebildet sind. Der Vorteil solcher Freiformflächen wird anschliessend noch näher erläutert.

Auf das vorliegende Beispiel bezogen dreht sich der Schneckenflügel 4c im Betrieb im Uhrzeigersinn. Die Fläche zwischen den Kanten b und d entspricht somit der sogenannten Förderflanke F, während die Fläche zwischen den Kanten a und b der Rückförderflanke RF entspricht. Die Steigung der Förderflanke F wird daher mit pitch-bd bezeichnet, während die Steigung der Rückförderflanke RF mit pitch-ab bezeichnet wird. Erfindungsgemäss liegt das Verhältnis Da/pitch-bd von Schneckenwellenaussendurchmesser Da zu Steigung Förderflanke zwischen 1.5 und 4.0. Dadurch wird erreicht, dass das aufzubereitende Produkt definiert gefördert, geschert und mit gezielten Stromteilungen Mischvorgänge realisiert werden. Das Verhältnis Da/pitch-ab von Schneckenwellenaussendurchmesser Da zu Steigung Rückförderflanke liegt zwischen 1.0 und 4.0. Durch dieses Verhältnis wird sichergestellt, dass die Relativbewegung des Produkts immer in Förderrichtung weist.

Wie bereits erwähnt, sind die seitlichen Hauptflächen der Schneckenflügel 4a-4d vorzugsweise als Freiformflächen ausgebildet. Vorzugsweise sind auch die Hauptflächen der Knetbolzen oder Knetzähne (nicht dargestellt) als Freiformflächen ausgebildet. Eine Freiformfläche ist eine Fläche, deren dreidimensionale Geometrie in keinem Punkt einen natürlichen Anfangspunkt besitzt. Indem die Hauptflächen der Schneckenflügel 4a-4d und/oder der Knetbolzen oder Knetzähne zumindest teilweise als Freiformflächen ausgebildet sind, ergeben sich vorteilhafte Beeinflussungsmöglichkeiten bezüglich der statischen wie auch der dynamischen Schneckenwellengeometrie, beispielsweise in Bezug auf den zwischen einem Schneckenflügel und dem zugehörigen Knetbolzen oder Knetzähne verbleibenden Spalt. Insbesondere kann die Grösse und der Verlauf dieses Spalts praktisch beliebig verändert werden, wobei gleichzeitig auch auf die der Drehbewegung überlagerte Axialbewegung der Schneckenwelle Rücksicht genommen werden kann. Dadurch kann letztlich ein optimierter mechanischer Energieeintrag und/oder eine Veränderung der im Prozessraum erzeugten und auf dem zu verarbeitenden Produkt einwirkenden Scher- und Dehnströmungsfelder erreicht werden.

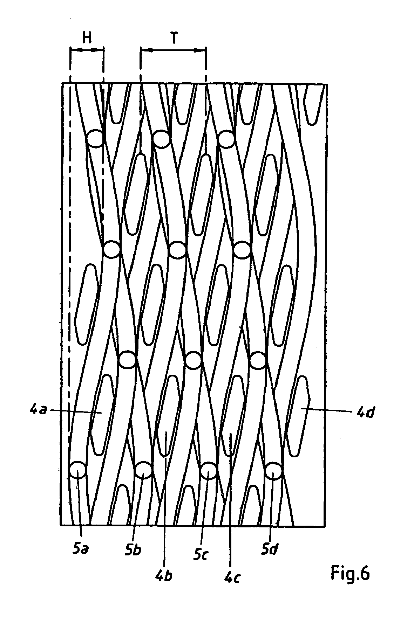

Aus der Fig. 6 ist in vereinfachter Darstellung der Bewegungsablauf der sich translatorisch bewegenden Schneckenwelle ersichtlich, wobei die Innenseite des Gehäuses bzw. die Mantelfläche des Arbeitsraums in der Abwicklung dargestellt ist und nur einzelne Schneckenflügel 4a, 4b, 4c, 4d eingezeichnet sind. Die Knetbolzen 5a, 5b, 5c ,5d sind der Einfachheit halber als runde Elemente dargestellt. Anhand dieser Figur ist die Relativbewegung zwischen dem jeweiligen Schneckenflügel 4a, 4b, 4c, 4d und den angrenzenden Knetbolzen 5a, 5b, 5c ,5d ersichtlich. Der besseren Übersichtlichkeit wegen ist der Bewegungsablauf in kinematischer Umkehr eingezeichnet, d.h. die Schneckenflügel 4a, 4b, 4c, 4d werden als stillstehend angenommen, während sich die Knetbolzen 5a, 5b, 5c ,5d auf einer sinusförmigen Bahn bewegen, welche durch die Drehbewegung der Schneckenwelle und die überlagerte translatorische Bewegung zu Stande kommt. Die Teilung T ist ebenfalls eingezeichnet. Sie entspricht dem Abstand zwischen zwei in axialer Richtung benachbarten Knetbolzen 5 bzw. Schneckenflügeln 4c, 4f. Der Hub H der Schneckenwelle ist ebenfalls eingetragen.

Neben der Bedingung, dass die Schneckenwelle zwischen vier und sechs Gruppen von radial gleichmässig über den Umfang verteilten Schneckenflügeln aufweist, stellen sich die Verhältnisse bei der Schneckenwelle 3 wie folgt dar:
- der Schneckenwellenaussendurchmesser Da liegt zwischen 400 und 800 Millimetern;
- die Drehzahl der Schneckenwelle liegt zwischen 30 und 80 1/min;
- das Verhältnis Da/pitch-bd von Schneckenwellenaussendurchmesser zu Steigung Förderflanke F liegt zwischen 1.5 und 4.0;
- das Verhältnis Da/pitch-ab von Schneckenwellenaussendurchmesser zu Steigung Rückförderflanke RF liegt zwischen 1.0 und 4.0;
- die einzelnen Elemente der Maschine sind derart auf die Betriebsparameter abgestimmt, dass die mittlere Verweilzeit der beiden Komponenten Koks und Pech vorzugsweise zwischen 60 und 150 Sekunden in dem Prozessraum der Maschine liegt;
- das Verhältnis PI/Da von Prozessraumlänge PI zu Schneckenwellenaussendurchmesser Da liegt zwischen 8 und 12;
- im Prozessraum wird eine Temperatur zwischen 180 und 220°C eingestellt.

Eine mit einer derartigen Schneckenwelle versehene Maschine eignet sich in besonderer Weise für die Herstellung einer Anodemasse, welche im Wesentlichen aus Kohlenstoff, vorzugsweise in der Form von Koks, sowie Pech aufbereitet wird. Wie bereits erwähnt, wird das Pech in flüssiger Form beigegeben, wobei darauf geachtet werden muss, dass das flüssige Pech nachhaltig in die Koks-Poren eindringen kann. Da das Pech insbesondere durch Diffusion in die Poren des Koks eindringt, muss zum einen die Temperatur in dem Prozessraum innerhalb des vorgegebenen Bereichs von 180 bis 220°C liegen und zum anderen müssen die beiden Komponenten eine mittlere Verweilzeit zwischen 60 und 150 Sekunden zusammen in dem Prozessraum der Maschine verbleiben.

Im Vergleich mit herkömmlichen Maschinen kann der Durchsatz nachhaltig gesteigert werden. So können mit der erfindungsgemäss ausgebildeten Maschine bei einem Schneckenwellenaussendurchmesser Da von ca. 600 Millimetern bis zu 60 Tonnen Elektrodenmasse pro Stunde hergestellt werden.

Die Maschine weist folgende weitere Kennwerte auf:
- das Verhältnis Da/Di zwischen Schneckenwellenaussendurchmesser Da und Schneckenwelleninnendurchmesser liegt Di zwischen 1.5 und 2.0;

Vorzugsweise weist die Maschine folgende weitere Kennwerte auf:
- das Verhältnis Da/H zwischen Schneckenwellenaussendurchmesser Da und Hub H liegt zwischen 4 und 6;
- das Verhältnis T/H zwischen Teilung T und Hub H liegt zwischen 1.2 und 2.5.

>

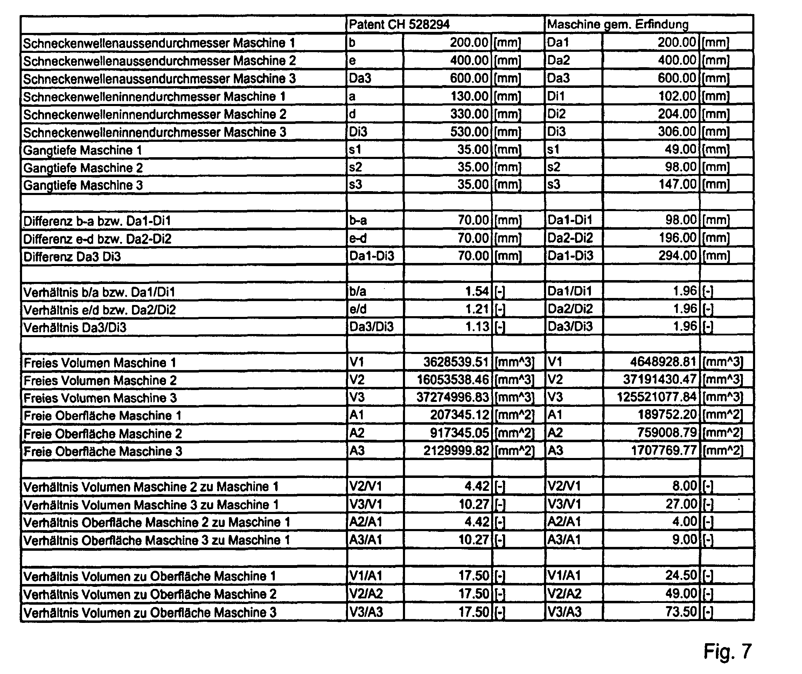

Fig. 7 zeigt eine Vergleichstabelle, aus der insbesondere ein Vergleich der in der CH 528'294 beschriebenen Maschine mit einer erfindungsgemäss ausgebildeten Misch- und Knetmaschine hervorgeht. Einige Parameter wie beispielsweise der Schneckenwellenaussendurchmesser Da1 wurden dabei so gewählt, dass ein Vergleich zwischen den beiden Maschinen möglich ist, auch wenn ein Da1 von 200mm bei der erfindungsgemäss ausgebildeten Maschine ausserhalb des beanspruchten Bereichs liegt. In der Tabelle wurden typische Werte eingetragen. Es versteht sich, dass die angegebenen Werte im Rahmen der in den Ansprüchen und/oder in der Beschreibung angegebenen Bereiche variieren können.

## Patentansprüche

1. Misch- und Knetmaschine (1) für kontinuierliche Aufbereitungsprozesse, mit einer in einem Gehäuse (2) rotierenden und sich gleichzeitig in axialer Richtung translatorisch bewegenden Schneckenwelle (3), wobei die Schneckenwelle (3) pro Umdrehung eine Hubbewegung ausführt, und die Schneckenwelle (3) zwischen vier und sechs Gruppen von radial gleichmässig über den Umfang verteilten Schneckenflügeln (4a, 4b, 4c, 4d) aufweist und die jeweilige Gruppe aus einer Mehrzahl von axial hintereinander angeordneten Schneckenflügeln besteht, **dadurch gekennzeichnet, dass** das Verhältnis PI/Da von Prozessraumlänge (PI) zu Schneckenwellenaussendurchmesser (Da) zwischen 8 und 12 liegt, der Schneckenwellenaussendurchmesser (Da) zwischen 400 und 800 Millimetern liegt und das Verhältnis Da/Di von Schneckenwellenaussendurchmesser (Da) zu Schneckenwelleninnendurchmesser (Di) zwischen 1.5 und 2.0 liegt.

2. Misch- und Knetmaschine (1) nach Anspruch 1, **dadurch gekennzeichnet, dass** die Misch- und Knetmaschine (1) mehrere in Förderrichtung aufeinanderfolgende, einen Prozessraum (6) bildende Zonen (8, 9, 10, 11) aufweist, wobei die Drehzahl der Schneckenwelle (3) sowie die Steigung der Schneckenflügel (4a, 4b, 4c, 4d) derart auf die Länge des Prozessraums (6) abgestimmt sind, dass die aufzubereitenden Produkte zwischen 60 und 150 Sekunden im Prozessraum (6) verweilen.

3. Misch- und Knetmaschine (1) nach einem der vorhergehenden Ansprüche, **dadurch gekennzeichnet, dass** die Drehzahl der Schneckenwelle (3) zwischen 30 und 80 1/min liegt.

4. Misch- und Knetmaschine (1) nach einem der vorhergehenden Ansprüche, **dadurch gekennzeichnet, dass** das Verhältnis Da/pitch-bd von Schneckenwellenaussendurchmesser (Da) zu Steigung Förderflanke (F) zwischen 1.5 und 4.0 liegt.

5. Misch- und Knetmaschine (1) nach einem der vorhergehenden Ansprüche, **dadurch gekennzeichnet, dass** das Verhältnis Da/pitch-ab von Schneckenwellenaussendurchmesser (Da) zu Steigung Rückförderflanke (RF) zwischen 1.0 und 4.0 liegt.

6. Misch- und Knetmaschine (1) nach Anspruch 1, **dadurch gekennzeichnet, dass** der Prozessraum (6) durch zumindest eine Einzugszone (8), eine Übergangszone sowie eine Misch- und Homogenisierungszone (10) gebildet wird und die Misch- und Knetmaschine (1) mit in den Prozessraum (6) hineinragen Knetbolzen (5, 5x) oder Knetzähnen versehen ist,

7. Misch- und Knetmaschine (1) nach Anspruch 1, **dadurch gekennzeichnet, dass** der Prozessraum (6) durch zumindest eine Einzugszone (8), eine Aufschmelzzone (9), eine Misch- und Dispergierzone (10) sowie eine Entgasungszone (11) gebildet ist.

8. Misch- und Knetmaschine (1) nach Anspruch 6 oder 7, **dadurch gekennzeichnet, dass** zumindest ein Knetbolzen (5x) oder Knetzahn mit einer Öffnung zum Einspritzen einer flüssigen Komponente versehen ist.

9. Misch- und Knetmaschine (1) nach einem der Ansprüche 5 bis 8, **dadurch gekennzeichnet, dass** die Hauptflächen der Schneckenflügel (4a, 4b, 4c, 4d) und/oder der Knetbolzen/Knetzähne zumindest teilweise als Freiformflächen ausgebildet sind.

10. Misch- und Knetmaschine (1) nach einem der vorhergehenden Ansprüche, **dadurch gekennzeichnet, dass** das Verhältnis Da/Di von Schneckenwellenaussendurchmesser (Da) zu Schneckenwelleninnendurchmesser (Di) zwischen 1.5 und 2.0 liegt, dass das Verhältnis Da/H von Schneckenwellenaussendurchmesser (Da) zu Hub (H) zwischen 4 und 6 liegt, und dass das Verhältnis T/H von Teilung (T) zu Hub (H) zwischen 1.2 und 2.5 liegt.

11. Verfahren zur Durchführung von kontinuierlichen Aufbereitungsprozessen mittels einer gemäss dem Anspruch 1 ausgebildeten Misch- und Knetmaschine (1), wobei die Schneckenwelle (3) mit einer Drehzahl zwischen 30 und 80 1/min betrieben wird, um plastische und/oder pastöse Massen aufzubereiten, wobei die Maschine (1) derart betrieben wird, dass die Produkte zwischen 60 und 150 Sekunden im Prozessraum verweilen..

12. Verfahren nach Anspruch 11, wobei die Misch- und Knetmaschine zur Aufbereitung von Anodenmassen für Elektroden ausgebildet ist und einen mit zumindest einer Misch- und Homogenisierungszone versehenen Prozessraum (6) aufweist, **dadurch gekennzeichnet, dass** im Prozessraum (6) eine Temperatur zwischen 180 und 220°C eingestellt wird.

13. Verfahren nach Anspruch 12, wobei der Prozessraum (6) neben der Misch- und Homogenisierungszone (10) eine Einzugszone (8) und/oder eine Übergangszone aufweist, **dadurch gekennzeichnet, dass** der Einzugszone (8) und/oder der Übergangszone zumindest eine Komponente in flüssiger Form zugeführt wird.

14. Verfahren nach Anspruch 13, **dadurch gekennzeichnet, dass** als flüssige Komponente Pech zugefügt wird.

15. Verwendung einer nach einem der Ansprüche 1 bis 10 ausgebildeten Misch- und Knetmaschine (1) zur Aufbereitung von zur Hauptsache aus Kohlenstoff -Koks- und Pech bestehenden Anodenmassen zur Herstellung von Elektroden -Anodenfür die elektrolytische Gewinnung von Aluminium.

## Claims

1. A mixing and kneading machine (1) for continual compounding including a screw shaft (3) rotating in a casing (2) and simultaneously moving axially translationally, wherein the screw shaft (3) executes a reciprocation for each revolution and comprises four to six groups of radial screw vanes (4a, 4b, 4c, 4d) evenly distributed circumferentially, each group consisting of a plurality of screw vanes in axial sequence, **characterized in that** the ratio P1/Da of processing space length (P1) to screw shaft outer diameter (Da) ranges from 8 to 12, the screw shaft outer diameter (Da) ranges from 400 to 800 millimetres and the ratio Da/Di of screw shaft outer diameter (Da) to screw shaft inner diameter (Di) ranges from 1.5 to 2.0.

2. The mixing and kneading machine (1) according to claim 1, **characterized in that** the mixing and kneading machine (1) comprises in the conveying direction a plurality of zones (8, 9, 10, 11) in sequence forming a processing space (6), wherein the rotary speed of the screw shaft (3) as well as the pitch of the screw vanes (4a, 4b, 4c, 4d) are adapted to the length of the processing space (6) such that the residence time of the products to be processed in the processing space (6) averages from 60 to 150 seconds.

3. The mixing and kneading machine (1) according to any of the preceding claims, **characterized in that** the rotary speed of the screw shaft (3) ranges from 30 to 80 rpm.

4. The mixing and kneading machine (1) according to any of the preceding claims, **characterized in that** the ratio Da/pitch-bd of screw shaft outer diameter (Da) to the pitch of the forward flank (F) ranges from 1.5 to 4.0.

5. The mixing and kneading machine (1) according to any of the preceding claims, **characterized in that** the ratio Da/pitch-ab of screw shaft outer diameter (Da) to the pitch of the return flank (RF) ranges from 1.0 to 4.0.

6. The mixing and kneading machine (1) according to claim 1, **characterized in that** the processing space (6) is formed by at least one infeed zone (8), a transition zone as well as a mixing and homogenizing zone (10) and the mixing and kneading machine (1) is provided with kneader pins (5, 5x) or kneader teeth protruding into the processing space (6).

7. The mixing and kneading machine (1) according to claim 1, **characterized in that** the processing space (6) is formed by at least one infeed zone (8), a melting zone (9), a mixing and dispersion zone (10) as well as a vent zone (11).

8. The mixing and kneading machine (1) according to claims 6 or 7, **characterized in that** at least one kneader pin (5x) or kneader tooth is provided featuring an orifice for injecting a fluid component.

9. The mixing and kneading machine (1) according to claims 5 to 8, **characterized in that** the main surfaces of the screw vanes (4a, 4b, 4c, 4d) and/or of the kneader pins/kneader teeth are configured at least in part as free-formed surfaces.

10. The mixing and kneading machine (1) according to any of the preceding claims, **characterized in that** the ratio Da/Di of screw shaft outer diameter (Da) to screw shaft inner diameter (Di) ranges from 1.5 to 2.0, the ratio Da/H of screw shaft outer diameter (Da) to stroke (H) ranges from 4 to 6 and the ratio T/H of pitch (T) to stroke (H) ranges from 1.2 to 2.5.

11. A method of implementing continual compounding by means of a mixing and kneading machine (1) according to claim 1, wherein the screw shaft (3) is operated at a rotational speed ranging from 30 to 80 rpm for compounding plastic and/or pasty masses, the machine (1) being operated such that the products reside in the processing space from 60 to 150 seconds.

12. The method according to claim 11, wherein the mixing and kneading machine is engineered for compounding anodic masses for electrodes and comprises a processing space (6) featuring at least one mixing and homogenizing zone, **characterized in that** the temperature in the processing space (6) is set to range from 180 to 220°C.

13. The method according to claim 12, wherein the processing space (6) comprises in addition to the mixing and homogenizing zone (10) an infeed zone (8) and/or a transition zone, **characterized in that** at least one fluidized component is fed to the infeed zone (8) and/or the transition zone.

14. The method according to claim 13, **characterized in that** pitch is fed as the fluidized component.

15. Use of a mixing and kneading machine (1) according to any of claims 1 to 10 for compounding anodic masses mainly consisting of carbon-coke and pitch for the production of electrodes-anodes for obtaining aluminum by means of electrolysis.

## Revendications

1. Malaxeuse-pétrisseuse (1) pour des procédés de préparation continus, comprenant une vis sans fin (3) tournant dans un logement (2) et mobile simultanément en translation dans le sens axial, sachant que la vis sans fin (3) exécute un mouvement de levage à chaque rotation, et la vis sans fin (3) présente entre quatre et six groupes d'ailettes de vis sans fin (4a, 4b, 4c, 4d) uniformément réparties radialement sur le pourtour, et le groupe respectif est composé d'une pluralité d'ailettes de vis sans fin disposées axialement l'une derrière l'autre, **caractérisée en ce que** le rapport P1/Da de la longueur de l'espace de procédé (P1) au diamètre extérieur de la vis sans fin (Da) fait entre 8 et 12, le diamètre extérieur de la vis sans fin (Da) fait entre 400 et 800 millimètres et le rapport Da/Di du diamètre extérieur de la vis sans fin (Da) et du diamètre intérieur de la vis sans fin (Di) fait entre 1,5 et 2,0.

2. Malaxeuse-pétrisseuse (1) selon la revendication 1, **caractérisée en ce que** la malaxeuse-pétrisseuse (1) présente plusieurs zones (8, 9, 10, 11) successives dans le sens d'avancement, formant un espace de procédé (6), sachant que la vitesse de la vis sans fin (3) ainsi que la pente des ailettes de vis sans fin (4a, 4b, 4c, 4d) sont ainsi déterminées sur la longueur de l'espace de procédé (6) que les produits à préparer séjournent entre 60 et 150 secondes dans l'espace de procédé (6).

3. Malaxeuse-pétrisseuse (1) selon l'une des revendications précédentes, **caractérisée en ce que** la vitesse de la vis sans fin (3) fait entre 30 et 80 1/min.

4. Malaxeuse-pétrisseuse (1) selon l'une des revendications précédentes, **caractérisée en ce que** le rapport Da/pitch-bd du diamètre extérieur de la vis sans fin (Da) à la pente du flanc d'avancement (F) fait entre 1,5 et 4.

5. Malaxeuse-pétrisseuse (1) selon l'une des revendications précédentes, **caractérisée en ce que** le rapport Da/pitch-ab du diamètre extérieur de la vis sans fin (Da) à la pente du flanc de retour (RF) fait entre 1,0 et 4,0.

6. Malaxeuse-pétrisseuse (1) selon la revendication 1, **caractérisée en ce que** l'espace de procédé (6) est formé par au moins une zone d'entrée (8), une zone de transition ainsi qu'une zone de mélange et d'homogénéisation (10) et la malaxeuse-pétrisseuse (1) est dotée de boulons de pétrissage (5, 5x) ou de dents de pétrissage faisant saillie dans l'espace de procédé (6).

7. Malaxeuse-pétrisseuse (1) selon la revendication 1, **caractérisée en ce que** l'espace de procédé (6) est formé par au moins une zone d'entrée (8), une zone de fusion (9), une zone de mélange et de dispersion (10) ainsi que d'une zone de dégazage (11).

8. Malaxeuse-pétrisseuse (1) selon la revendication 6 ou 7, **caractérisée en ce qu'**au moins un boulon de pétrissage (5x) ou une dent de pétrissage est doté(e) d'une ouverture pour injecter une composante liquide.

9. Malaxeuse-pétrisseuse (1) selon l'une des revendications 5 à 8, **caractérisée en ce que** les surfaces principales des ailettes de vis sans fin (4a, 4b, 4c, 4d) et/ou des boulons/dents de pétrissage sont formées au moins partiellement en tant que surfaces à forme libre.

10. Malaxeuse-pétrisseuse (1) selon l'une des revendications précédentes, **caractérisée en ce que** le rapport Da/Di du diamètre extérieur de la vis sans fin (Da) et du diamètre intérieur de la vis sans fin (Di) fait entre 1,5 et 2, que le rapport Da/H du diamètre extérieur de la vis sans fin (Da) au levage (H) fait entre 4 et 6, et que le rapport T/H du pas (T) au levage (H) fait entre 1,2 et 2,5.

11. Procédé destiné à l'exécution de procédés de préparation continus au moyen d'une malaxeuse-pétrisseuse conçue selon la revendication 1, sachant que la vis sans fin (3) est entraînée à une vitesse entre 30 et 80 l/min, pour préparer des masses plastiques et/ou pâteuses, sachant que la machine (1) est ainsi entraînée que les produits séjournent entre 60 et 150 secondes dans l'espace de procédé.

12. Procédé selon la revendication 11, dans lequel la malaxeuse-pétrisseuse est conçue pour préparer des masses d'anode pour des électrodes et présente un espace de procédé (6) doté au moins d'une zone de mélange et d'homogénéisation, **caractérisé en ce qu'**une température entre 180 et 220 °C est réglée à l'intérieur de l'espace de procédé (6).

13. Procédé selon la revendication 12, dans lequel l'espace de procédé (6) présente une zone d'entrée (8) et/ou une zone de transition, en plus de la zone de mélange et d'homogénéisation (10), **caractérisé en ce que** la zone d'entrée (8) et/ou la zone de transition est alimentée avec au moins une composante sous forme fluidique.

14. Procédé selon la revendication 13, dans lequel de la poisse est ajoutée en tant que composante fluidique.

15. Emploi d'une malaxeuse-pétrisseuse (1) conçue selon l'une des revendications 1 à 10 pour préparer des masses d'anode composées principalement de carbone, de coke et de poisse pour fabriquer des anodes-électrodes pour l'extraction électrolytique d'aluminium.
